# EUROPEAN PATENT SPECIFICATION

(11) **EP 4 252 524 B1**
(45) Date of publication and mention of the grant of the patent: **03.06.2026**
(21) Application number: 20963692.7
(22) Date of filing: 27.11.2020
(51) Int. Cl.: A01G 9/02, B29C 45/16

(54) **FLOWERPOT TO WHICH FASTENING MEMBERS ARE FASTENED**
BLUMENTOPF MIT BEFESTIGUNGSELEMENTEN
POT DE FLEURS AUQUEL SONT FIXÉS DES ÉLÉMENTS DE FIXATION

(43) Date of publication of application: 04.10.2023
(73) Proprietor: GS Korea Co., Ltd., Jeongup-si, Jeollabuk-do 56151 (KR)
(72) Inventor: KIM, Se yong, Anyang-si Gyeonggi-do 14101 (KR)
(74) Representative: Verscht, Thomas Kurt Albert
(86) International application number: PCT/KR2020/017127
(87) International publication number: WO 2022/114297

(56) References cited:
- JP-A- 2007 170 460
- JP-A- 2007 170 460
- JP-A- H1 075 665
- JP-B2- 6 279 029
- JP-U- H 065 438
- KR-B1- 101 992 857
- KR-B1- 101 992 857
- US-A1- 2004 200 141
- US-A1- 2008 022 589
- US-A1- 2019 320 595

## Description

### Technical Field

The present disclosure relates to a flowerpot to which fastening members assembled for a growing plant are fastened.

### Background Art

Pots provide an adequate environment for plants to grow. Most flowerpots currently available are made of a plastic material, and have a structure in which protrusions are formed crossing the inner and outer surfaces, and through-holes are formed in the formed protrusions. Due to the through-holes, air can flow, water flowing in from the outside can be drained smoothly, and roots inside a pot are not entangled with each other.

Depending on its color, a pot has a great influence on root growth. For example, if the color is black, the internal temperature may rise to 40 °C or more and protein in the roots is destroyed. Moreover, by drying soil in the pot, a barren environment is created for plants to grow. As such, black pots inhibit root growth.

Companies researching and developing flowerpots are actively trying to make pots that solve the above-mentioned problems of black flowerpots. For example, pots in a color with high light reflectivity, that is, white, and having inner/outer protrusions are being developed. The problem is that the manufacturing cost of white pots is high because the white pots cannot be made from recycled raw materials. As a result, in terms of price competitiveness, the white pots lag behind in the plant pot market.

Accordingly, there is a need for a flowerpot that solves the problem of white pots, that is, the high manufacturing cost, while having the advantage of the white pots, that is, facilitating root growth in plants.

From JP 2007 170460 A a two piece clip is known including a grommet and a pin. The grommet includes an annular flange part and an engagement piece engaging with the attachment hole under diameter expanding condition. The pin includes a shaft part inserted in the grommet and an umbrella shape head part continuously provided on a base part side of the shaft part. When the head part is pressed, the head part abuts on a flange part via a projection and elastically deforms in a flat shape.

From US 2004 200141 A1 a plant container and sidewall comprising a nonporous root-tip-trapping region and a porous air-root-pruning region combined to form the sidewall is known. The regions may be configured in various patterns including rows, columns, dots, and checkerboard. However, the most preferred configuration has the root-tip-trapping region forming a continuous upper portion of the sidewall and the air-root-pruning region forming the lower portion of the sidewall.

Finally, from KR 2018 0010054 A a coupling member is known which is coupled to a through-hole formed on a plant pot to distribute air. The coupling member includes: a case formed in a cylindrical shape while including one or more through holes; a first member which has a partially-cut side inserted into the through-holes, is inserted into the exterior of the case, and has insert holes formed on the other side; and a second member having first insert protrusions having a side inserted into the insert holes.

### Disclosure

### Technical Problem

The present disclosure has been made keeping in mind the problems occurring in the related art. An objective of the present disclosure is to provide a flowerpot that is white on the outside and black on the inside in order to solve the problem that occurs when the outer surface of a pot is black.

In addition, an objective of the present disclosure is to provide a flowerpot consisting of a case that may be easily transformed into a pot by means of members selectively coupled to inner/outer protrusions formed on the plate-shaped case that is white on the outside and black on the inside, which is intended to solve the problem of not being able to transform into various pot shapes in an existing plate-shaped case.

Furthermore, an objective of the present disclosure is to provide a flowerpot that allows a first member and a second member to be easily separated due to a shape feature when a case is transformed from a plate shape to a cylindrical shape, which is intended to solve the problem that fastening members are not easily separated.

### Technical Solution

In order to achieve the above mentioned objective, according to an embodiment of the present disclosure, there is provided a flowerpot including: a case, in a shape of a plate made of plastic material, formed in white on an outside and black on an inside, configured to include an outer protrusion protruding from an outer surface thereof and partially cutting to form a through-hole and an inner protrusion protruding from an inner surface thereof to intersect the outer protrusion and partially cutting to form a through-hole, and transformed into a cylindrical shape by combining a first end and a second end thereof;
a third member formed in a disc shape and inserted into the case when the case is transformed into the cylindrical shape;
a first member in which a first side thereof is partially incised and provided with a disc-shaped first handle part, wherein an insertion hole is formed in a center of the first handle part; and
a second member provided with a second handle part having a larger inner diameter than that of the first handle part on a second side thereof, and a first insertion protrusion in a direction perpendicular to the second handle part, wherein the first member and the second member may form an assembly in which the first insertion protrusion is inserted into the insertion hole and the bottom surface of the first handle part come in contact with the uppermost surface of the through-hole.

The first member may further include
an adhesion module provided on an inner surface thereof to increase adhesion of the second member inserted into the insertion hole.

The second member may include:
a first insertion plate; a second insertion plate perpendicularly crossing the first insertion plate; a plurality of tapered parts provided between the first insertion plate and the second insertion plate; and a holding protrusion and an accommodating groove, both of which are formed on outer surfaces of the first insertion plate and the second insertion plate.

### Advantageous Effects

As described above, according to the present disclosure, the outer surface is formed in white to reflect ultraviolet rays and thermal infrared coming from outside and suppress the temperature rise of a pot. In addition, the inner surface is formed in black so that recycled raw materials can be used, and visible light from the outside is not transmitted to roots. This prevents the roots from drying out. Moreover, since the outer surface of a case is white and the inner surface of the case is black, the overall temperature rise of the pot can be suppressed and problems of water in soil accelerating decay and of mold growth in the soil can be prevented.

Furthermore, according to the present disclosure, the case can be easily transformed into a pot by means of fastening members selectively coupled to inner/outer protrusions formed on the plate-shaped case, and transformation into various pot shapes from an existing plate-shaped case is possible.

Furthermore, according to the present disclosure, when the case is transformed from a plate shape to a cylindrical shape, a first member and a second member can be easily separated due to a shape feature, so that the fastening members can be easily separated.

### Description of Drawings

FIG. 1 is a perspective view showing that first to third members are coupled to a case in a flowerpot to which fastening members are fastened according to an embodiment of the present disclosure;
FIG. 2 is a perspective view showing that first to third members are coupled to a case in a flowerpot to which fastening members are fastened according to an embodiment of the present disclosure;

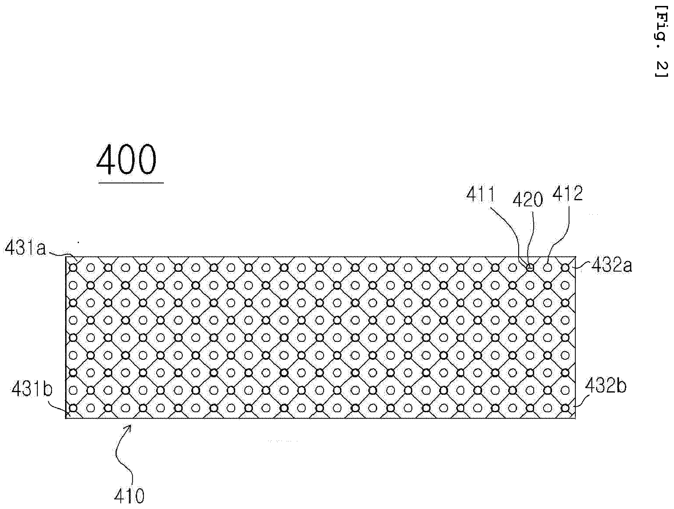

FIG. 2 is a plan view of the case according to the embodiment of the present disclosure;

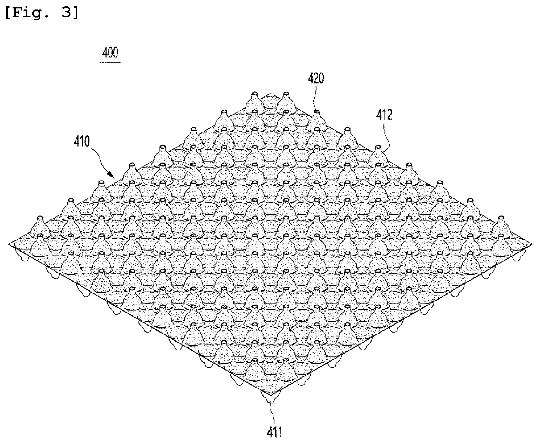

FIG. 3 is an enlarged perspective view of the case in the flowerpot to which fastening members are fastened according to the embodiment of the present disclosure;

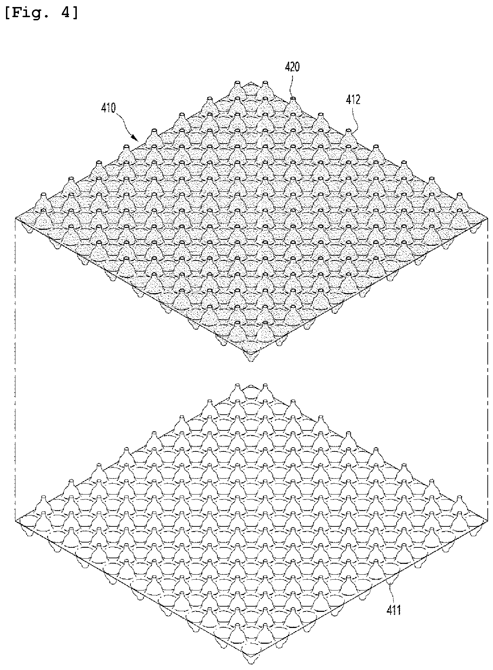

FIG. 4 is a perspective view showing inner protrusions and outer protrusions of the case in the flowerpot to which fastening members are fastened shown in FIG. 3;

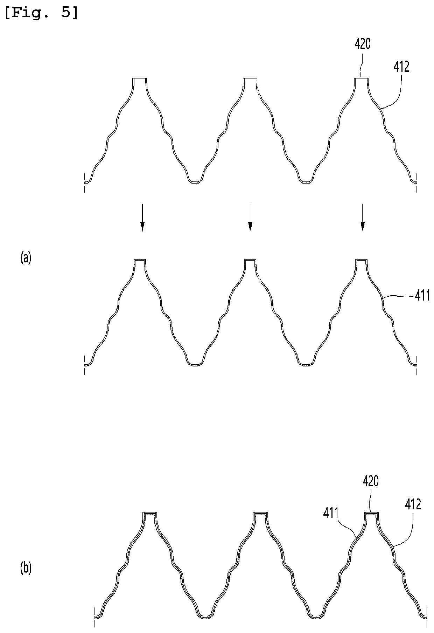

FIG. 5 shows cross-sectional views of the inner protrusions and outer protrusions, and the case with the inner protrusions and outer protrusions combined;

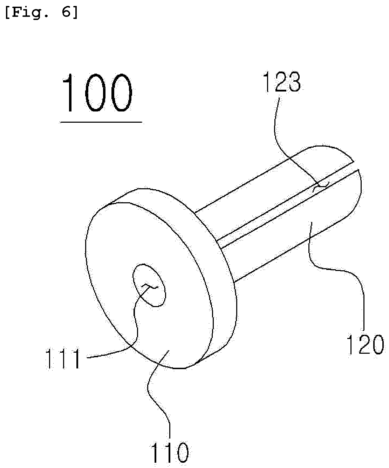

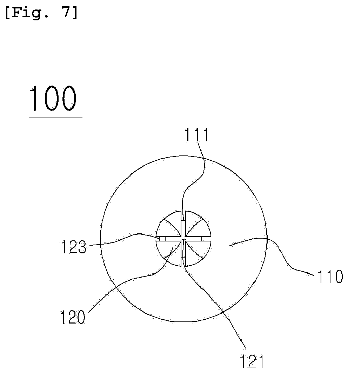

FIGS. 6 and 7 are perspective views showing the first member of the first example fastened to the case according to the embodiment of the present disclosure;

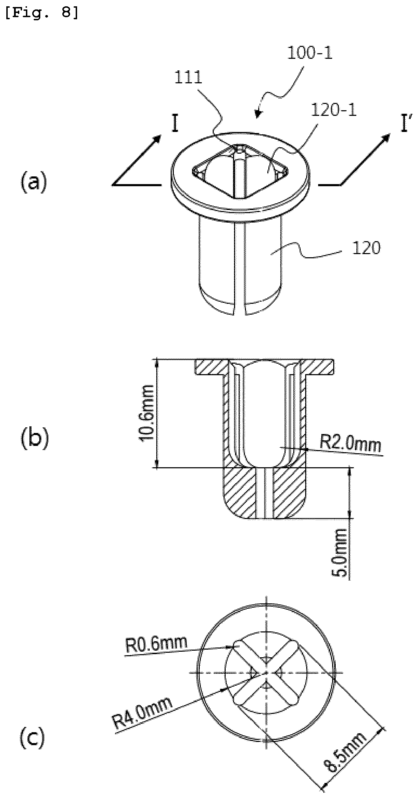

FIG. 8 shows views showing the first member of the second example fastened to the case according to the embodiment of the present disclosure;

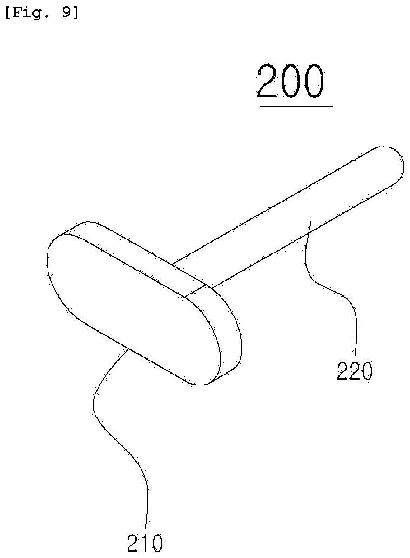

FIG. 9 is a perspective view showing the second member of the first example fastened to the first member of the first example shown in FIG. 6;

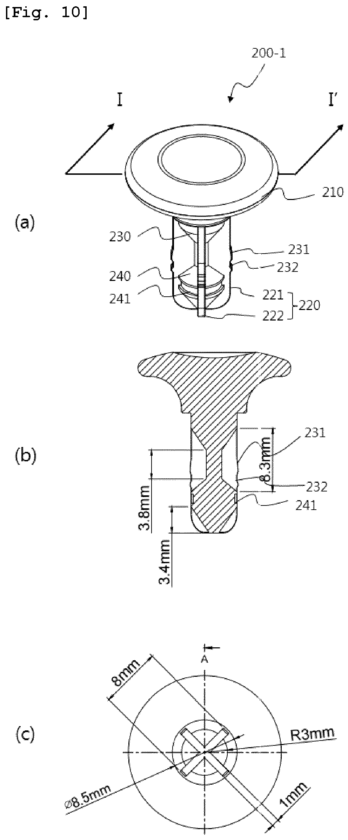

FIG. 10 shows views showing the second member of the second example fastened to the first member of the second example shown in FIG. 8;

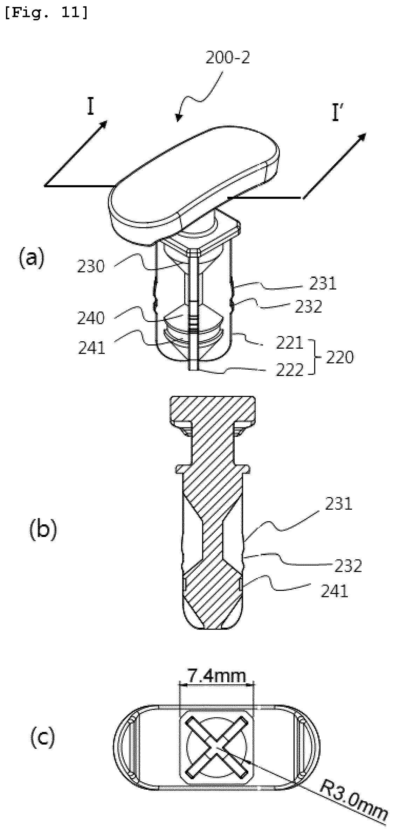

FIG. 11 shows views showing the second member of the third example fastened to the first member of the second example shown in FIG. 8;

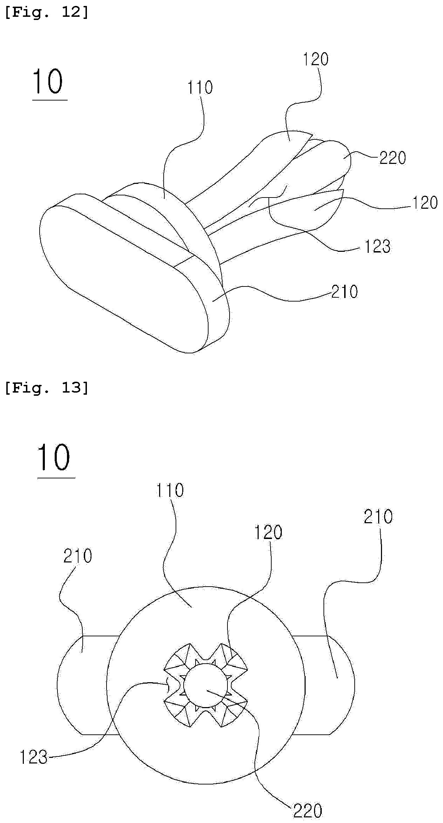

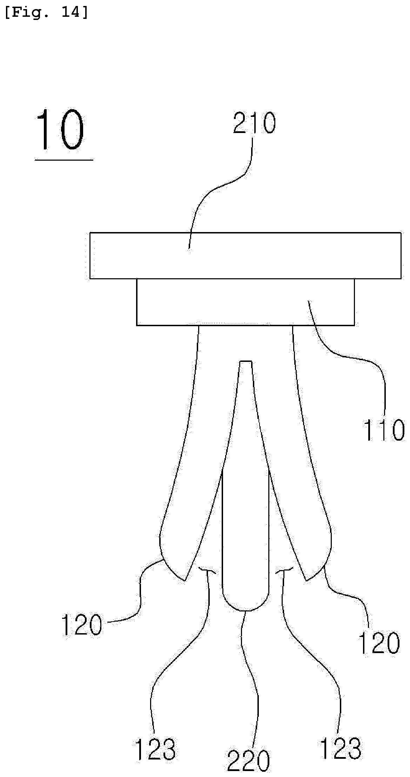

FIGS. 12 to 14 are views showing an assembly in which the first member of FIG. 6 and the second member of FIG. 9 are fastened;

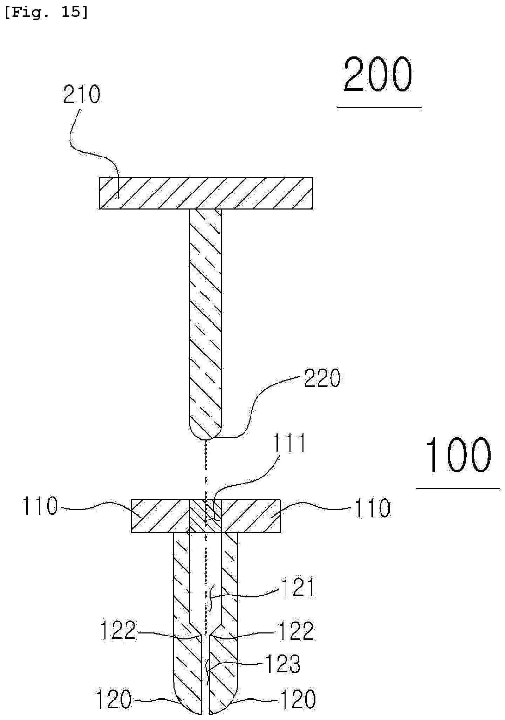

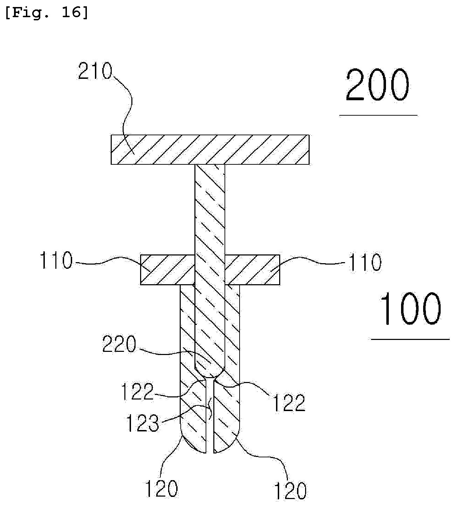

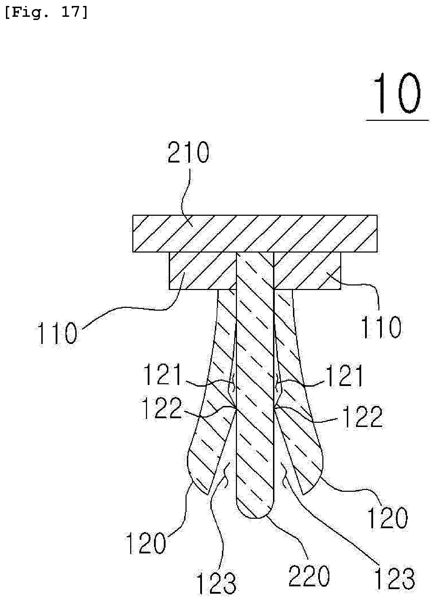

FIGS. 15 to 17 are views showing a state in which the first member of FIG. 6 and the second member of FIG. 9 are fastened;

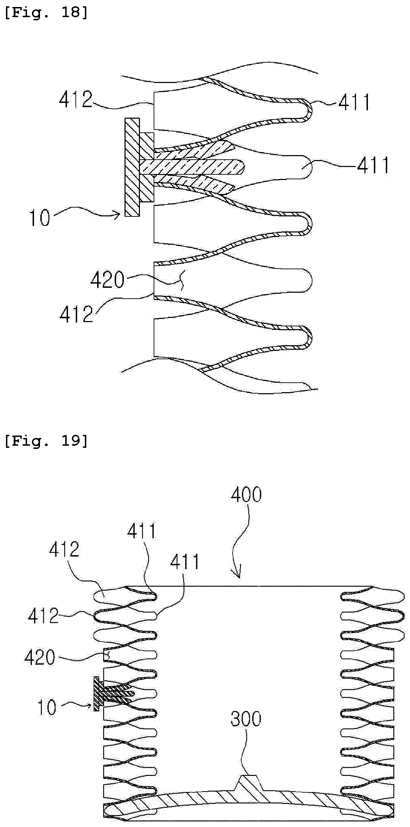

FIG. 18 is a view showing a state in which the assembly is coupled to the case according to the embodiment of the present disclosure;
FIG. 19 is a view showing the case in which the third member and the assembly are fastened according to the embodiment of the present disclosure; and

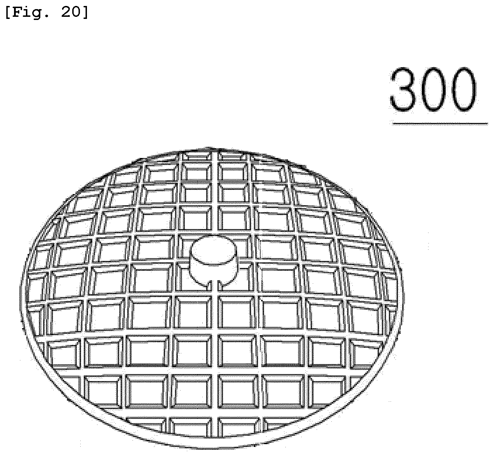

FIG. 20 is a view showing the third member coupled to the case according to the embodiment of the present disclosure.

### Best Mode

Advantages and features of the present disclosure, and methods for achieving then will become clear with reference to the detailed description of the following embodiments in conjunction with the accompanying drawings.

However, the present disclosure is not limited to the embodiments disclosed below, and may be implemented in various different forms. These embodiments are merely provided to complete the disclosure of the present disclosure and to completely inform those skilled on the art of the scope of the invention to which the present disclosure pertains, and do not define the present disclosure. The invention is defined solely by the claims. In addition, like reference numerals refer to like components throughout this specification.

Hereinafter, the present disclosure will be described with reference to drawings showing a flowerpot to which fastening members are fastened according to the embodiments of the present disclosure.

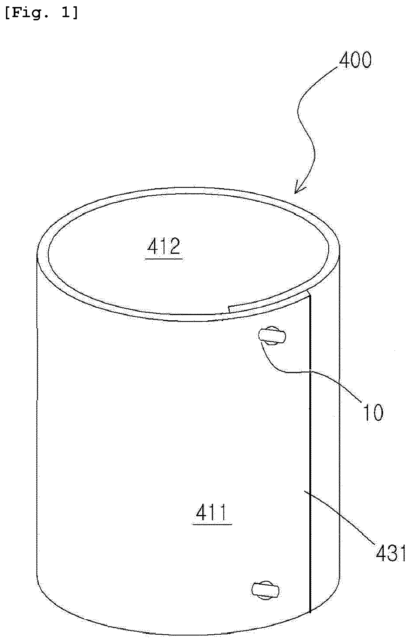

In order to make the description of the present disclosure concise and clear, after describing the flowerpot and a case to which fastening members are fastened in detail with reference to FIGS. 1 to 5, first to third members fastened to the case will be described in detail with reference to FIGS. 6 to 20.

FIG. 1 is a perspective view showing that first to third members are coupled to a case in a flowerpot to which fastening members are fastened according to an embodiment of the present disclosure, FIG. 2 is a plan view of the case according to the embodiment of the present disclosure, FIG. 3 is an enlarged perspective view of the case in the flowerpot to which fastening members are fastened according to the embodiment of the present disclosure, FIG. 4 is a perspective view showing inner protrusions and outer protrusions of the case in the flowerpot to which fastening members are fastened shown in FIG. 3, and FIG. 5 shows cross-sectional views of the inner protrusions and outer protrusions, and the case with the inner protrusions and outer protrusions combined.

In a flowerpot to which fastening members are fastened according to the present disclosure, the outer surface of a case 400 is formed in white to reflect ultraviolet rays and thermal infrared coming from outside and suppress the temperature rise of a pot. In addition, the inner surface of the case 400 is formed in black so that visible light from the outside is not transmitted to roots. This prevents the roots from drying out.

The flowerpot to which fastening members are fastened includes the case 400, a first member 100, a second member 200, and a third member 300.

Hereinafter, the components constituting the flowerpot to which fastening members are fastened will be described in detail.

The case 400 is made of a plastic material on which outer protrusions 412 protruding outwardly and inner protrusions 411 protruding inwardly intersect. At this time, the case 400 has a structure in which one side is white and the other side is black. That is, the case 400 is manufactured by double injection molding, and may have one side that is white and the other side that is black.

The case 400 may be formed in a plate shape as shown in FIG. 2, and transformed into a cylindrical shape as shown in FIG. 1. In addition, the black inner surface of the case may be injection-molded using recycled raw materials. The case 400 becomes a cylindrical shape by combining one end 431 thereof and the other end 432 thereof. The case 400 becomes a cylindrical shape as the inner protrusions 411 of one end 431 and the inner protrusions 411 of the other end 432 are assembled to each other, and the outer protrusions 412 of one end 431 and the outer protrusions 412 of the other end 432 are assembled to each other. At this time, the case 400 may be formed in a cylindrical shape as shown in FIG. 1 so that one surface thereof becomes an outer surface of the flowerpot while the other surface thereof becomes an inner surface of the flowerpot.

Particularly, the case 400 may have a black top surface and a white bottom surface as shown in FIG. 4. The bottom surface may become the outer surface and the top surface may become the inner surface. The case 400 may be formed as a flowerpot in which the white surface is the outer surface and the black surface is the inner surface. As shown in FIG. 4, the white surface on which the inner protrusions 411 are formed and the black surface on which the outer protrusions 412 are formed are attached during the manufacturing process, and may be formed as a single member as shown in FIG. 3. According to the flowerpot formed in this way, the overall temperature of the pot rise may be suppressed and problems of water in the pot being corrupted and of mold growth in soil in the pot may be prevented. In addition, the black side of the case 400 may block visible light from the outside and prevent the visible light from passing to roots, preventing the roots from drying out.

The case 400 as above may increase the temperature of a flowerpot by an average of 5 °C or less when the flowerpot is formed in a case that is entirely black, compared to when the flowerpot is formed in a case that is not entirely black. Normally, when the internal temperature of the pot rises above 40 °C, the protein in the plant roots melts, which adversely affects plant growth. The case 400 of the present disclosure is composed of a white outer surface so as to reflect light transmitted from the outside, and prevent the internal temperature of the pot from reaching 40 °C.

When the case 400 is transformed from a plate shape to a cylindrical shape by combining the first member and the second member, an assembly 10 maintains the cylindrical shape. To be specific, the assembly 10 is inserted into a through-hole of each of the outer protrusions 412 of one end 431 and a through-hole 420 of each of the outer protrusions 412 of the other end 432, or a through-hole of each of the inner protrusions 411 of one end 431 and a through-hole of each of the inner protrusions 411 of the other end 432 in order to prevent the case 400 assembled in the cylindrical shape from being unfolded.

Hereinafter, with reference to FIGS. 6 to 18, description will be given of the first member and the second member, the assembly in which the first member and the second member are fastened, and a state in which the assembly is fastened to the case.

FIGS. 6 and 7 are perspective views showing the first member of the first example fastened to the case according to the embodiment of the present disclosure, FIG. 8 shows views showing the first member of the second example fastened to the case according to the embodiment of the present disclosure, FIG. 9 is a perspective view showing the second member of the first example fastened to the first member of the first example shown in FIG. 6, FIG. 10 shows views showing the second member of the second example fastened to the first member of the second example shown in FIG. 8, FIG. 11 shows views showing the second member of the third example fastened to the first member of the second example shown in FIG. 8, FIGS. 12 to 14 are views showing an assembly in which the first member of FIG. 6 and the second member of FIG. 9 are fastened, FIGS. 15 to 17 are views showing a state in which the first member of FIG. 6 and the second member of FIG. 9 are fastened, and FIG. 18 is a view showing a state in which the assembly is coupled to the case according to the embodiment of the present disclosure.

First, the first member 100 of the first example will be described in detail.

The first member 100 includes: a first handle part 110 in the form of a disc with an insertion hole 111 in the center thereof; a plurality of first protrusions 120 formed on the other side of the first handle part 110; and a partially-incised one side 123 formed between the plurality of first protrusions 120. The first member 100 is inserted into the outer surface of the case 400 as the partially-incised one side 123 is inserted into the through-hole 420.

As shown in FIG. 8, the first member 100 of the second example has an adhesion module 120-1 provided on the inner surface thereof to increase adhesion of the second member inserted into the insertion hole 111. At this time, the adhesion module 120-1 is formed on one side and the other side of the insertion hole 111 shown in FIG. 8, and may press a first insertion protrusion 220 of the second member 200 introduced into the insertion hole 111.

The second member 200 includes: the first insertion protrusion 220 whose one side is inserted into the insertion hole 111; and a second handle part 210 provided on the other side of the first insertion protrusion 220. At this time, the inner diameter of the second handle part 210 is formed larger than the inner diameter of the first handle part 110 of the first member 100, so that the entire second member 200 is not inserted into the first member 100.

The first insertion protrusion 220 of the second member 200 is inserted into the insertion hole 111 of the first member 100, and after being inserted into the insertion hole 111, may protrude further from the partially-incised one side 123 by a predetermined distance. At this time, after one side of the first member 100 is inserted into the through-hole 420, the second member 200 is inserted into the insertion hole 111, so that the partially-incised one side 123 is widened and fixed to the through-hole 420.

In addition to the first example, the second member 200 may be modified in various ways such as the second example shown in FIG. 10 and the third example shown in FIG. 11. The second and third examples are the same except for the shape of the second handle 210. Thus, the second members of the second and third examples will be grouped together so that the description of the second members of the second and third examples may be concise and clear.

The second member 200-1 of the second example and the second member 200-2 of the third example each include: a first insertion plate 221; a second insertion plate 222 perpendicularly crossing the first insertion plate 221; a plurality of tapered parts 230 and 240 formed between the first insertion plate 221 and the second insertion plate 222; an insertion protrusion having a holding protrusion 231 and an accommodating groove 232, both of which are formed on the outer surfaces of the first insertion plate 221 and the second insertion plate 222. At this time, the first insertion plate 221 and the second insertion plate 222 are connected to form an X shape as shown in FIGS. 10 and 11, and may form the first to fourth quadrants. The plurality of tapered parts 230 and 240 include: an upper tapered part 230 formed on the upper parts of the first insertion plate 221 and the second insertion plate 222; and a lower tapered part 240 formed on the lower parts of the first insertion plate 221 and the second insertion plate 222. The lower tapered part 240 includes a rim groove 241 so as to be more strongly fastened to the first member of the second example.

The upper tapered part 230 and the lower tapered part 240 are formed in a tapered shape, and may each be provided between the first and second quadrants, the second and third quadrants, the third and fourth quadrants, and the fourth and first quadrants. By combining the upper tapered parts and the lower tapered parts formed in the first to fourth quadrants, a conical shape inclined downward with respect to the center line may be achieved.

The first member of the first example and the second member of the first example may be combined to form the assembly 10 as shown in FIGS. 10 to 12. In addition, the first member of the second example may be combined with the second member of the second example or the second member of the third example to form the assembly.

In this specification, for convenience of description, the assembly will be described on the basis of the assembly formed by combining the first member according to the first example and the second member according to the first example.

As shown in FIGS. 15 to 17, the first insertion protrusion 220 of the second member is inserted into the insertion hole 111 and opens the partially-incised one side 123 of the first member 100 to spread the partially-incised one side 123 and the plurality of the first protrusions 120, so that the distance between the plurality of the first protrusions becomes wider than the inner diameter of the through-hole 420, thereby fixing the assembly 10 to the through-hole 420.

As such, as shown in FIGS. 18 and 19, the assembly 10 may pass through a specific through-hole 420 formed by assembling the through-hole of the outer protrusion 412 formed at one end 431 of the case and the through-hole of the outer protrusion 412 formed at the other end 432 of the case together, and fix one end of the case and the other end of the case, so that the case 400 is maintained in a cylindrical shape.

In addition, the third member 300 is installed at the inner lower end of the cylindrical case.

FIG. 20 is a view showing the third member coupled to the case according to the embodiment of the present disclosure.

The third member 300 is formed in a disk shape as shown in FIG. 20 and is inserted into the case 400.

The third member 300 is a thin plastic material and may be made of recycled resin. In addition, the inner surface of the case 400 described in the present disclosure may also be made of recycled resin.

Those of ordinary skill in the art to which the present disclosure pertains will be able to understand that the present disclosure may be embodied in other specific forms without changing essential features thereof. Therefore, the embodiments described above should be understood as illustrative in all respects and not limiting. The scope of the present invention is indicated by the claims described below.

## Claims

1. A flowerpot to which fastening members are fastened, the flowerpot comprising:
a case (400) configured to include outer protrusions (412) protruding from an outer surface thereof and inner protrusions (411) protruding from an inner surface thereof to intersect with the outer protrusions;
a first member (100) in which a first side thereof is partially incised and provided with a disc-shaped first handle part (110) on a second side thereof, wherein an insertion hole (111) is formed in a center of the first handle part (110);
a second member (200) provided with a first insertion protrusion (220) having a side inserted into the insertion hole (111), and a second handle part (210) having a larger inner diameter than that of the first handle part (110) on a second side thereof; and
a third member (300) formed in a disc shape and inserted into the case,
wherein the case (400) is formed in a shape of a plate made of plastic material, transformed into a cylindrical shape by combining a first end and a second end thereof, and includes a through-hole (420) formed by cutting a part of one of the outer protrusions and one of the inner protrusions, and
the first member (100) and the second member (200) form an assembly (10) provided by inserting the first insertion protrusion (220) of the second member (200) into the insertion hole (111) of the first member (100), and in which a surface of the first handle part (110) comes into contact with an end of the through-hole ,
**characterised in that** the case is made by double injection molding, formed in white on an outside and black on an inside.

2. The flowerpot of claim 1, wherein the first member further includes an adhesion module (120-1) provided on an inner surface thereof to increase adhesion of the second member inserted into the insertion hole (111), and
the second member includes: a first insertion plate (221);
a second insertion plate (222) perpendicularly crossing the first insertion plate (221);
a plurality of tapered parts (230, 240) provided between the first insertion plate (221) and the second insertion plate (222); and
a holding protrusion (231) and an accommodating groove (232), both of which are formed on outer surfaces of the first insertion plate (221) and the second insertion plate (222).

## Patentansprüche

1. Ein Blumentopf, an welchem Befestigungsglieder befestigt sind, wobei der Blumentopf folgendes aufweist:
ein Gehäuse (400), das konfiguriert ist, um Außenvorsprünge (412), die von einer Außenoberfläche davon vorstehen, und Innenvorsprünge (411), die von einer Innenoberfläche davon vorstehen, um sich mit den Außenvorsprüngen zu schneiden, aufzuweisen;
ein erstes Glied (100), in welchem eine erste Seite davon teilweise eingeschnitten ist und mit einem scheibenförmigen ersten Griffteil (110) auf einer zweiten Seite davon versehen ist, wobei ein Einsetzloch (111) in einer Mitte des ersten Griffteils (110) gebildet ist;
ein zweites Glied (200), welches mit einem ersten Einsetzvorsprung (220), mit einer in das Einsetzloch (111) eingesetzten Seite, und einem zweiten Griffteil (210), mit einem größeren Innendurchmesser als der des ersten Griffteils (110) auf einer zweiten Seite davon, versehen ist; und
ein drittes Glied (300), welches in einer Scheibenform gebildet ist und in das Gehäuse eingesetzt ist,
wobei das Gehäuse (400) in einer Form einer Platte, die aus Kunststoffmaterial hergestellt ist, gebildet ist, in eine zylindrische Form durch Verbinden eines ersten Endes und eines zweiten Endes davon umgeformt wird, und ein Durchgangsloch (420) aufweist, das durch Schneiden eines Teils von einem der Außenvorsprünge und einem der Innenvorsprünge gebildet ist, und
das erste Glied (100) und das zweite Glied (200) bilden eine Baugruppe (10), die durch Einsetzen des ersten Einsetzvorsprungs (220) des zweiten Glieds (200) in das Einsetzloch (111) des ersten Glieds (100) vorgesehen ist, und in der eine Oberfläche des ersten Griffteils (110) mit einem Ende des Durchgangslochs in Kontakt kommt,
**dadurch gekennzeichnet, dass** das Gehäuse durch Doppelspritzgießen hergestellt wird, in Weiß auf einer Außenseite und schwarz auf einer Innenseite gebildet ist.

2. Der Blumentopf nach Anspruch 1, wobei das erste Glied ferner ein Haftmodul (120-1) aufweist, das auf einer Innenfläche davon vorgesehen ist, um eine Haftung des zweiten Glieds, das in das Einsetzloch (111) eingesetzt ist, zu erhöhen, und
das zweite Glied weist folgendes auf: eine erste Einsetzplatte (221);
eine zweite Einsetzplatte (222), welche die erste Einsetzplatte (221) senkrecht kreuzt;
eine Vielzahl von sich verjüngenden Teilen (230, 240), die zwischen der ersten Einsetzplatte (221) und der zweiten Einsetzplatte (222) vorgesehen sind; und
ein Haltevorsprung (231) und eine Aufnahmenut (232), die beide auf den Außenoberflächen der ersten Einsetzplatte (221) und der zweiten Einsetzplatte (222) gebildet sind.

## Revendications

1. Pot de fleurs auquel sont fixés des organes de fixation, le pot de fleurs comprenant :
un boîtier (400) configuré pour inclure des saillies extérieures (412) faisant saillie à partir d'une surface extérieure de celui-ci et des saillies intérieures (411) faisant saillie à partir d'une surface intérieure de celui-ci pour croiser les saillies extérieures ;
un premier organe (100) dans lequel un premier côté de celui-ci est partiellement incisé et doté d'une première partie poignée en forme de disque (110) sur un deuxième côté de celui-ci, dans lequel un trou d'insertion (111) est formé au centre de la première partie poignée (110) ;
un deuxième organe (200) doté d'une première saillie d'insertion (220) ayant un côté inséré dans le trou d'insertion (111), et d'une deuxième partie poignée (210) ayant un diamètre intérieur plus grand que celui de la première partie poignée (110) sur un deuxième côté de celui-ci ; et
un troisième organe (300) réalisé en une forme de disque et inséré dans le boîtier,
dans lequel le boîtier (400) est réalisé en une forme de plaque en matériau plastique, transformé en une forme cylindrique en combinant une première extrémité et une deuxième extrémité de celui-ci, et comporte un trou traversant (420) formé par découpe d'une partie de l'une des saillies extérieures et de l'une des saillies intérieures, et
le premier organe (100) et le deuxième organe (200) forment un ensemble (10) réalisé par insertion de la première saillie d'insertion (220) du deuxième organe (200) dans le trou d'insertion (111) du premier organe (100), et dans lequel une surface de la première partie poignée (110) entre en contact avec une extrémité du trou traversant,
**caractérisé en ce que** le boîtier est réalisé par moulage par injection double, formé en blanc sur un extérieur et en noir sur un intérieur.

2. Pot de fleurs selon la revendication 1, dans lequel le premier organe comporte en outre un module d'adhérence (120-1) prévu sur une surface intérieure de celui-ci pour augmenter l'adhérence du deuxième organe inséré dans le trou d'insertion (111), et
le deuxième organe comporte : une première plaque d'insertion (221) ;
une deuxième plaque d'insertion (222) traversant perpendiculairement la première plaque d'insertion (221) ;
une pluralité de parties coniques (230, 240) prévues entre la première plaque d'insertion (221) et la deuxième plaque d'insertion (222) ; et
une saillie de maintien (231) et une rainure de logement (232), toutes deux formées sur des surfaces extérieures de la première plaque d'insertion (221) et de la deuxième plaque d'insertion (222).
